# EUROPÄISCHE PATENTSCHRIFT

(11) **EP 3 332 133 B1**
(45) Veröffentlichungstag und Bekanntmachung des Hinweises auf die Patenterteilung: **06.10.2021**
(21) Anmeldenummer: 15794818.3
(22) Anmeldetag: 15.10.2015
(51) Int. Cl.: F16B 37/04

(54) **KÄFIGMUTTER**
CAGE NUT
ÉCROU PRISONNIER

(30) Priorität: 06.08.2015 DE 202015005604 U
(43) Veröffentlichungstag der Anmeldung: 13.06.2018
(73) Patentinhaber: Ramsauer, Dieter, 58332 Schwelm (DE)
(72) Erfinder: Ramsauer, Dieter, 58332 Schwelm (DE)
(74) Vertreter: Cohausz & Florack
(86) Internationale Anmeldenummer: PCT/EP2015/002042
(87) Internationale Veröffentlichungsnummer: WO 2017/020921

(56) Entgegenhaltungen:
- EP-B1- 1 846 664
- DE-A1- 10 210 709
- DE-T2- 69 503 312
- None

## Beschreibung

### Bereich der Erfindung

Die Erfindung betrifft eine Käfigmutter, gemäß dem Oberbegriff von Anspruch 1.

### Stand der Technik

Eine derartige Käfigmutter ist aus der DE 102 10 709 A1 bereits bekannt.

Des weiteren sei auch die in der EP 1 846 664 B1 dargestellte Käfigmutter genannt.

Nachteilig ist hier, dass zwischen dem Käfig und dem Rahmen mit der Mutter auch bei angezogener Mutter Spiel in Richtung der Achse der Käfigmutter bleibt. Außerdem ist nachteilig, dass die Käfigmutter nur von hinten und hier nur mit Werkzeug eingesetzt werden kann.

### Aufgabe der Erfindung

Aufgabe der Erfindung ist es, weitere Ausführungsformen der Käfigmutter gemäß einer verwandten Art zu schaffen, die weitere Vorteile aufweist, wie erweiterte Montage und gleichzeitig die genannten Nachteile vermeidet. Insbesondere soll die Herstellung der Käfigmutter erleichtert werden.

### Aufgabenlösung

Diese Aufgabe wird durch die kennzeichnenden Merkmale des Anspruchs 1 gelöst.

Durch die Erfindung wird das Einstecken einer Käfigmutter vorzugsweise hierin rechteckigen Durchbrüchen in einer dünnen Wand, wie gelochtes Profil ermöglicht, indem sie zunächst teilweise hineingeschoben werden kann, wonach der Käfig mit der Mutter um einen Winkel kleiner als 90 Grad, vorzugsweise 45 Grad innerhalb des Durchbruchs gedreht wird, wonach der Käfig mit der Mutter bis zum Anschlagen der Stützabschnitte an der dünnen Wand eingeschoben werden kann, wonach die Schraube in die Mutter eingedreht werden kann.

Gemäß der Erfindung hat die Mutter in Draufsicht die Form eines Kreises, von dem diametral gegenüberliegende Ansätze vorspringen, die in einem rechten Winkel auslaufen, wobei die Abmessungen derart sind, dass der Kreis in die quadratische Öffnung passt und die Ansätze in zwei sich gegenüberliegende Ecken des Quadrats passen.

Gemäß einer anderen Ausführungsform (Anspruch 3) hat der Käfig im Bereich der sich diametral gegenüberliegende Ansätze eine rechteckige, durch die quadratische Öffnung passend hindurch schiebbare Form.

Gemäß einer noch anderen Weiterbildung (Anspruch 4) ist in dem Bereich sich diametral gegenüberliegende Ansätze eine axial verlaufende Kante mit einer Anlagefläche vorgesehen, die beim Anziehen der Schraube in die Mutter mit einer von der Mutter gebildeten Kante am Übergang von Kreis zum Ansatz in Eingriff tritt.

Gemäß einer noch anderen Weiterbildung der Erfindung (Anspruch 5) bilden die Ansätze der Mutter einen Hintergriff, der den inneren Rand des quadratischen Durchbruchs ggf. nach Drehung um 45 Grad stützt.

Die Stützabschnitte werden von zwei im axialen Abstand zueinander liegenden Leisten gebildet.

Die eine Leiste ist in einem Abschnitt des Fehlens der anderen Leiste gestützt.

Die Erfindung wird anhand von Ausführungsbeispielen näher erläutert, die in den Zeichnungen dargestellt sind.

### Kurze Übersicht über die Zeichnungen

Es zeigt:
- Fig. 1: in perspektivischer Explosionsansicht die zwei Komponenten, nämlich Käfig und Mutter einer nicht erfindungsgemäßen Käfigmutter;
- Fig. 2: die ineinander gesteckten Teile der Käfigmutter in perspektivischer Ansicht;
- Fig. 3: eine Ansicht von oben auf die Anordnung der Fig. 2;
- Fig. 4: eine Ansicht ähnlich der Fig. 2, jedoch um 90 Grad gedreht;
- Fig. 5A: eine Draufsicht auf die in einer quadratischen Lochung montierte Käfigmutter,
- Fig. 5B: eine Schnittansicht entlang der Linie A-A der Fig. 5A,
- Fig. 5C: eine perspektivische Ansicht von hinten auf die Anordnung der Fig. 5A und 5B;
- Fig. 6A: in Draufsicht die Montageschritte, zunächst nämlich das Hineinstecken der Käfigmutter in einen Durchbruch passender Größe in einer dünnen Wand in 45 Grad-Stellung,
- Fig. 6B: das anschließende Drehen um 45 Grad,
- Fig. 6C: das Einsetzen einer Schraube in ein Rundloch in einem ersten Teil aus dünnem Wandmaterial und
- Fig. 6D: die montierte Schraube mit einem an dem ersten Teil montierten zweiten Teil,
- Fig. 7: in vergrößerter Darstellung eine andere nicht erfindungsgemäße Käfigmutter in einer axialen Schnittansicht,
- Fig. 8: eine Draufsicht auf die Anordnung der Fig. 7 mit stark vergrößertem Maßstab und die Angabe der Schnittlinie der Fig. 7,
- Fig. 9A: eine perspektivische Darstellung des Befestigungsvorganges bei der Montage von oben,
- Fig. 9B: eine entsprechende Darstellung des Montagevorgangs der Montage von unten,
- Fig. 10: die Anordnung nach erfolgter Montage,
- Fig. 11: die Anordnung der Fig. 7, hier jedoch auseinander gezogen,
- Fig. 12A: in vergrößerter Darstellung den Käfig der Anordnung gemäß der Erfindung, in perspektivischer Ansicht,
- Fig. 12B: eine Seitenansicht,
- Fig. 12C: eine um 90° verdrehte Seitenansicht und

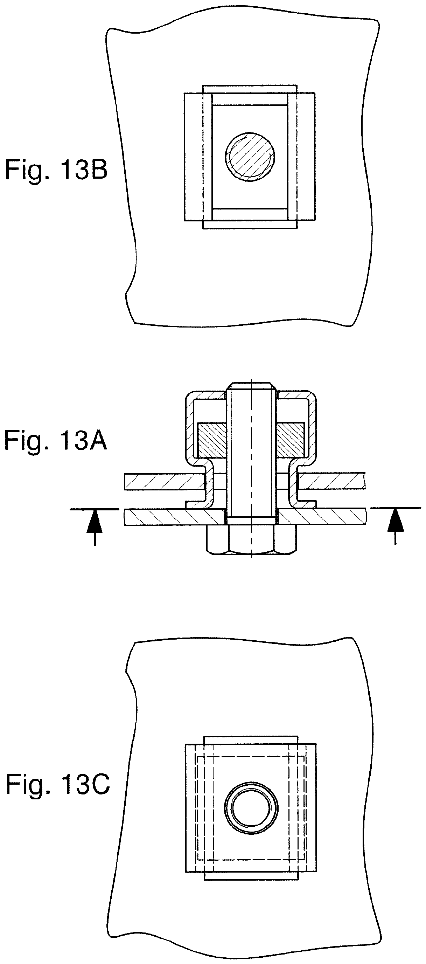

- Fig. 13A, 13B, 13C: in Schnittansicht eine Draufsicht von oben bzw. eine Draufsicht von unten auf eine Anordnung, die zum Stand der Technik gehört.

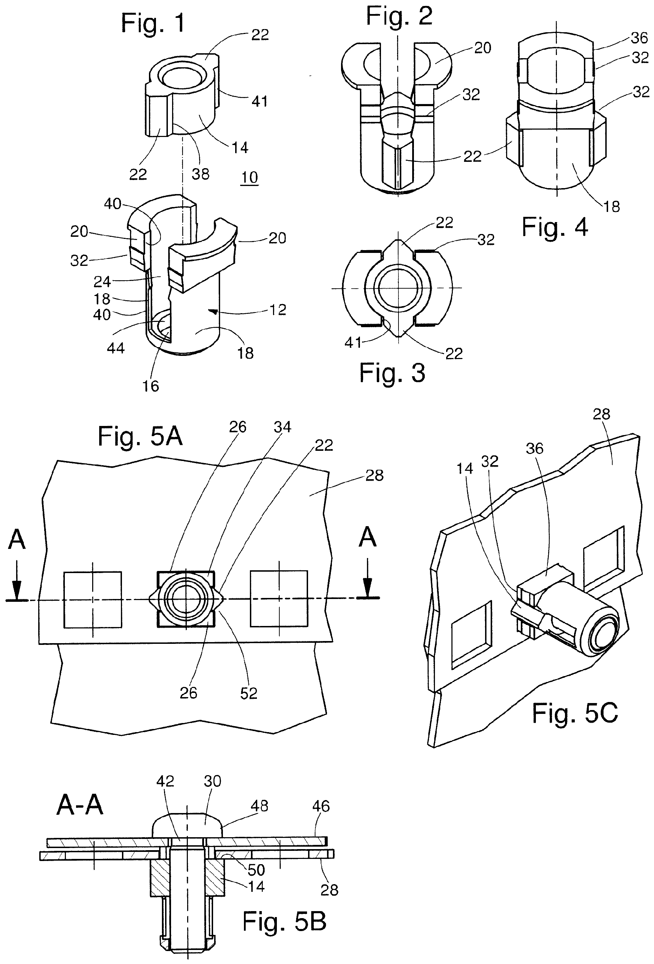

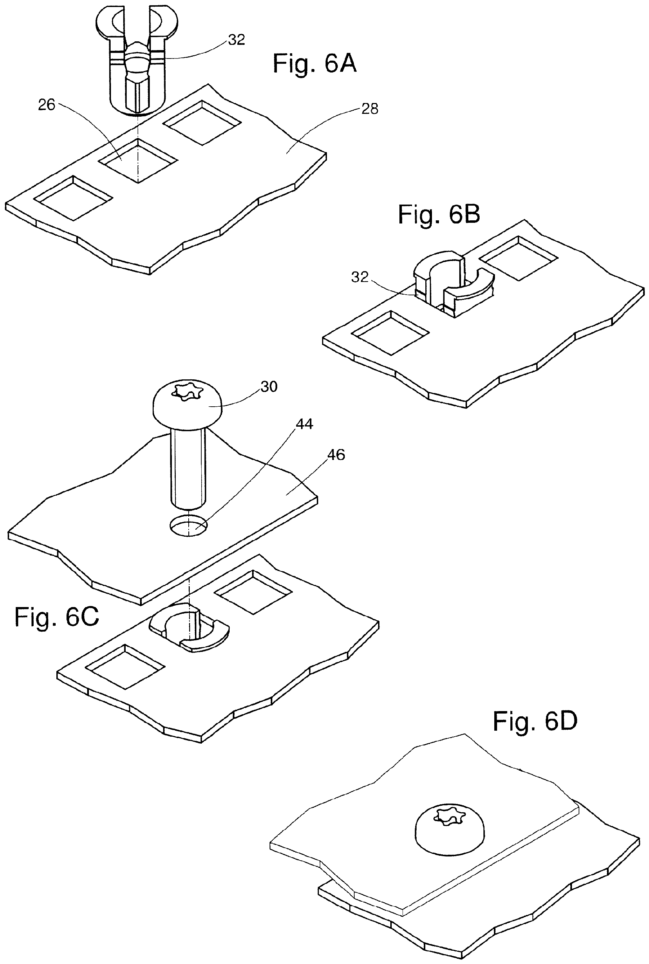

Fig. 1 zeigt in perspektivischer Ansicht eine Käfigmutter 10, umfassend eine in einem Käfig 12 angeordnete Mutter 14, wobei der Käfig 12 einen Boden 16 mit einer Bohrung 44 aufweist, von dem aus zwei einander gegenüberliegende Seitenteile 18 aufsteigen, die jeweils einen auswärts gerichteten Stützabschnitt 20 tragen und wobei die Mutter 14 diametral sich gegenüberliegende Ansätze 22, 24 aufweist, die derart geformt sind, dass sie bei in den Käfig 12 eingelegter Mutter 14 in einer bestimmten Drehposition, siehe Fig. 6A, in den nichtrunden, vorzugsweise quadratischen Durchbruch 26 in einer dünnen Wand 28 teilweise eingeschoben werden kann, siehe Fig. 6B, wonach der Käfig 12 mit der Mutter 14 um einen Winkel kleiner als 90 Grad, vorzugsweise 45 Grad innerhalb des Durchbruchs 26 gedreht wird, nämlich in die Position gemäß Fig. 6B, wonach der Käfig mit der Mutter bis zum Anschlagen der Stützabschnitte 20 an der dünnen Wand 28 eingeschoben werden kann, wonach die Schraube 30 in die Mutter 14 eingedreht werden kann.

Die Seiten der Stützabschnitte 20 tragen Zähne 32, die ein Wiederherausfallen des Käfigs 12 nach der Montage verhindern.

Die Mutter 14 hat in Draufsicht, siehe Fig. 5A, die Form eines Kreises 34, von dem sich diametral gegenüberliegende Ansätze 22 vorspringen, die in einem rechten Winkel auslaufen, wobei die Abmessungen derart sind, dass der Kreis 34 in die quadratische Öffnung 26 passt und die Ansätze 22 in zwei sich gegenüberliegende Ecken des Quadrats passen.

Der Käfig im Bereich sich diametral gegenüberliegenden Ansätze 22 hat eine rechteckige durch die quadratische Öffnung 26 passend hindurch schiebbare Form 36.

Wie in Fig. 5A erkennbar wird, besitzt die Mutter 12 in Draufsicht die Form eines Kreises 34, von dem diametral gegenüberliegende Ansätze 22 vorspringen, die in einen rechten Winkel auslaufen, wobei die Abmessungen derart sind, dass der Kreis in die quadratische Öffnung passt und die Ansätze 22 in zwei sich gegenüberliegende Ecken des Quadrats passen. Der Käfig 12, in dessen Bereich eine axial verlaufende Kante 40 mit einer Anlagefläche 41 vorgesehen ist, tritt beim Anziehen der Schraube in der Mutter mit einer am Übergang von Kreis zum Ansatz 22 von der Mutter gebildete Kante 38 in Eingriff, siehe Fig. 1 und 3.

Die Ansätze 22 der Mutter 14 bilden einen Hintergriff 50, für den inneren Rand 52 des quadratischen Durchbruchs 26 nach Drehung um 45 Grad, Fig. 5A.

Die zugehörige Kopfschraube 30 hat einen Kopf 48 und einen Hals 42, wobei der Hals 42 die runde Öffnung 44 im Montageblech 46 durchdringt, Fig. 6C.

Unterhalb dieses Bereichs befinden sich auch die in Eingriff tretenden Flächen 40, 41 von Käfig 12 und Mutter 14.

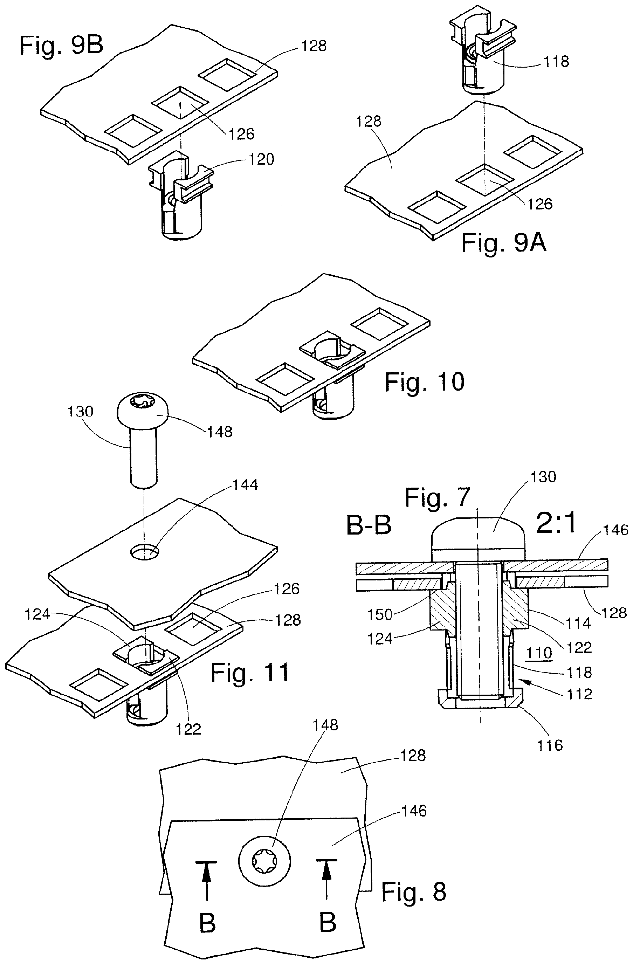

Fig. 7 zeigt in axialer Schnittansicht eine alternative Käfigmutter 110, umfassend eine in einem Käfig 112 angeordnete Mutter 114, wobei der Käfig 112 einen Boden 116 mit einer Bohrung 44 aufweist, von dem aus zwei einander gegenüberliegende Seitenteile 118 aufsteigen, die jeweils einen auswärts gerichteten Stützabschnitt 120 tragen und wobei die Mutter 114 diametral sich gegenüberliegende Ansätze 122, 124 aufweist, siehe Fig. 7, die derart geformt sind, dass sich bei in den Käfig 112 eingelegter Mutter 114 in einer bestimmten Drehposition, siehe Fig. 9A, 9B, in den rechteckigen, vorzugsweise quadratischen Durchbruch 126 in einer dünnen Wand 128 teilweise eingeschoben werden kann, siehe Fig. 10, 11, wonach der Käfig 112 zusammen mit der Mutter 114 am unteren Ende des Käfigs 112 mit dem oberen Ende unter Zusammendrücken der Seitenteile 118 des Käfigs 112 oberhalb der Mutter 114 innerhalb des Durchbruchs 126 eingeklipst wird, nämlich in die Position gemäß Fig. 10, wonach die Mutter in dem Käfig bis zum Anschlagen an der dünnen Wand 128 eingeschoben werden kann, indem die Schraube 130 in die Mutter 114 eingedreht wird.

Die Seiten der Stützabschnitte 20 tragen Leisten 132, 133, 135, die ein Wiederherausfallen des Käfigs 112 nach dem Einklipsen verhindern.

Auch hier hat die Mutter 114, siehe auch Fig. 5A, die Form eines Kreises von dem diametral gegenüberliegende Ansätze 122, 124 vorspringen, die in einem rechten Winkel auslaufen, wobei die Abmessungen derart sind, dass der Kreis in die quadratische Öffnung 126 passt und die Ansätze 122, 124 in zwei sich gegenüberliegende Ecken des Quadrats passen.

Der Käfig im Bereich sich diametral gegenüberliegender Ansätze 122 hat eine rechteckige durch die quadratische Öffnung 136 passend hindurch schiebbare Form.

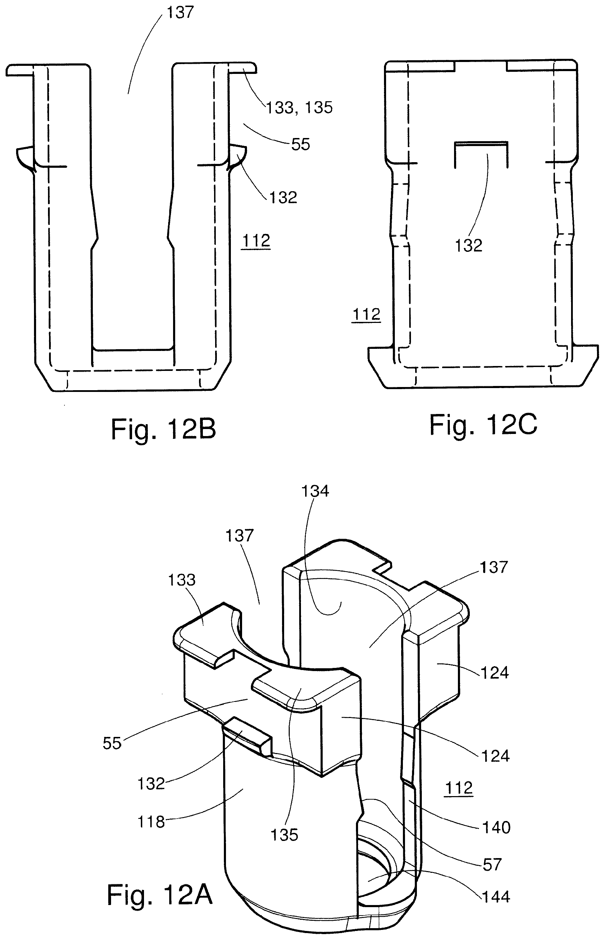

Wie in Fig. 12A erkennbar wird, besitzt der Käfig 112 für die Mutter 114 eine Bohrung, die in Draufsicht die Form eines Kreises 134 hat, von dem diametral gegenüberliegende Schlitze 137 für die Ansätze 122 vorspringen, wobei die Abmessungen derart sind, dass der Kreis in die quadratische Öffnung passt und die Ansätze 122 in zwei sich gegenüberliegende Ecken des Quadrats passen. Der Käfig 112, in dessen Bereich eine axial verlaufende Kante 140 mit einer Anlagefläche vorgesehen ist, die beim Anziehen der Schraube in die Mutter mit einer von der Mutter gebildeten Kante 138 am Übergang von Kreis zum Ansatz 122 in Eingriff tritt.

Die Ansätze 122 der Mutter 114 bilden einen Hintergriff 150, der den inneren Rand des quadratischen Durchbruchs 126 abstützt.

Die zugehörige Kopfschraube 130 hat einen Kopf und einen Hals und einen Fuß, wobei der Hals die runde Öffnung 144 im Montageblech durchdringt.

In diesem Bereich befinden sich auch die in Eingriff tretenden Flächen von Käfig und Schraube, wobei die Schraube des Käfigs in seiner oberen Stellung, siehe Fig. 7, verhindert, dass die Seitenteile zusammengedrückt werden können.

Der Käfig 12, 112 besteht somit aus einem runden zylindrischen Teil, zweifach geschlitzt und Stützabschnitten 20, 120 die man aber auch Kopf nennen könnte. Unter dem Kopf befindet sich ein quadratischer Ansatz 24, 124.

Bei der ersten Ausführung der Käfigmutter 10 ist es so, dass diese nur blind von vorne montiert werden sollte und ein akzeptabler Sitz wurde dadurch erreicht, dass der Vierkantansatz 36, 136 an vier Flächen mit Zähnen 32 ausgestattet ist, die nach Montage der Käfigmutter ein Herausfallen oder Verschieben verhindert.

Bei der zweiten Ausführung der Käfigmutter 110 ist auch ein Kopf vorgesehen, mit einem darunter liegenden Vierkantansatz 124 und einer zusätzlichen Leiste 132, 133, 135, die eine U-förmige Nut 55 bilden, mit denen der Käfig 112 im Vierkant- oder Rechteckdurchbruch 126 verankert wird. Um dies zu bewerkstelligen, müssen die gegenüberliegenden Seitenteile 118 bei der Montage, etwas nach innen gebogen werden, damit die U-förmigen Nuten 55 das Blech 128 umfassen können.

Bei beiden Käfigmuttern 10, 110 ist es so, dass nach der Montage des Käfigs 12, 112 die eingedrehte Schraube 30, 130 die Muttern 14, 114 axial bewegt, bis sie auf der hinteren Seite des Bleches 28, 128 mit ihren Ansätzen 22, 122 aufliegen. Bei diesem Vorgang werden die Seitenteile 18, 118 stabilisiert. Seitenteile und Mutter füllen dann in einer Richtung das Vierkantloch 26, 126 spielfrei aus und sichern gleichzeitig die Mutter gegen Verdrehen.

Die Stützabschnitte 20, 120 können von zwei Leisten 132, 133, 134 gestützt werden, die in axialem Abstand zueinander liegen, wobei die eine Leiste 132 in einem Abschnitt des Fehlens der anderen Leiste 133, 134 vorgesehen ist, das aus Gründen der Vereinfachung des Spritzwerkzeuges.

Die Seitenteile 118 können Schlitze 137 bilden, die eine Verengung 57 im Verlauf aufweisen.

### Gewerbliche Auswertbarkeit

Die Erfindung ist im Schaltschrankbau, im Automobilbau und in der feinblechverarbeitenden Industrie gewerblich ausnutzbar.

### Bezugszeichenliste:

- 10, 110: Käfigmutter
- 12, 112: Käfig
- 14, 114: Mutter
- 16, 116: Boden
- 18, 118: Seitenteil
- 20, 120: Stützabschnitt
- 22, 122: Ansatz der Mutter
- 24, 124: Ansatz des Käfigs
- 26, 126: Durchbruch, quadratisch
- 28, 128: Dünne Wand
- 30, 130: Schraube
- 32, 132: Zahnleisten, Zähne
- 34, 134: Kreis
- 36, 136: Rechteckform
- 137: Schlitze
- 38, 138: Axiale Leiste der Mutter
- 40, 140: dito des Käfigs
- 41: Anlagefläche der Mutter
- 42, 142: Hals
- 44, 144: rundes Loch
- 46, 146: Montageblech
- 48, 148: Kopf
- 50, 150: Hintergriff
- 55: U-förmige Nut
- 57: Verengung

## Patentansprüche

1. Käfigmutter (10,110), geeignet für einen quadratischen Durchbruch in einer dünnen Wand, umfassend eine in einem Käfig (12, 112) angeordnete Mutter (14, 114), wobei der Käfig (12, 112) einen Boden (16, 116) umfasst, der ein Rundloch aufweist, von dem aus zwei einander gegenüberliegende Seitenteile (18, 118) aufsteigen, die jeweils einen auswärts gerichteten Stützabschnitt (20, 120) tragen, wobei die Mutter (14) diametral sich gegenüberliegende Ansätze aufweist, die derart geformt sind, dass die in den Käfig eingelegte Mutter in einer bestimmten Drehposition in den quadratischen Durchbruch in einer dünnen Wand axial notfalls nach Zusammendrücken der Seitenteile teilweise eingeschoben werden kann, wonach die Schraube (30) in die Mutter (14) eingedreht werden kann, wobei vor dem Einsetzen und Eindrehen der Schraube (30) der Käfig mit der Mutter um einen Winkel kleiner als 90 Grad, vorzugsweise 45 Grad innerhalb des quadratischen Durchbruchs (26) gedreht wird, wobei der Käfig mit der Mutter in der diagonalen Richtung des Rechtecks eingeschoben wird, wonach der Käfig mit der Mutter bis zum Anschlagen der Stützabschnitte (32) an der dünnen Wand eingeschoben werden kann, wobei die Mutter (14, 114) in Draufsicht die Form eines Kreises (34, 134) hat, von dem sich diametral gegenüberliegend Ansätze vorspringen, die in einem rechten Winkel auslaufen, wobei die Abmessungen derart sind, dass der Kreis (34, 134) in die quadratische Öffnung (26, 126) passt und die Ansätze (22, 122) in zwei sich gegenüberliegende Ecken des Quadrats (26) passen, **dadurch gekennzeichnet, dass** die Stützabschnitte (20, 120) von zwei im axialen Abstand zueinander liegenden Leisten (132, 133, 135) gebildet werden, und dass die eine Leiste (132) in einem Abschnitt des Fehlens der anderen Leiste (133, 135) angeordnet ist.

2. Käfigmutter (10) nach Anspruch 1, **dadurch gekennzeichnet, dass** die Seiten der Stützabschnitte (20) Zähne (32) tragen, die ein Wiederherausfallen des Käfigs (12) nach Montage verhindern.

3. Käfigmutter (10, 110) nach Anspruch 1 oder 2, **dadurch gekennzeichnet, dass** der Käfig (12,112) im Bereich sich diametral gegenüberliegenden Ansätze (22, 122) eine durch den rechteckigen, quadratischen Durchbruch passend hindurch schiebbare Form hat.

4. Käfigmutter (10, 110) nach Anspruch 3, **dadurch gekennzeichnet, dass** in dem Bereich eine axial verlaufende Kante (40,140) mit einer Anlagefläche vorgesehen ist, die beim Anziehen der Schraube (30, 130) in die Mutter (14, 114) mit einer von der Mutter gebildete Kante (38, 138) am Übergang vom Kreis zum Ansatz (36, 136) in Eingriff tritt.

5. Käfigmutter (10) nach Anspruch 3, **dadurch gekennzeichnet, dass** die Ansätze der Mutter einen Hintergriff (50) bilden, der den inneren Rand des quadratischen Durchbruchs, ggf. nach Drehung um 45 Grad, stützt.

## Claims

1. Cage nut (10, 110), suitable for a square opening in a thin wall, comprising a nut (14,114) arranged in a cage (12, 112), wherein the cage (12, 112) has a base (16, 116), that has a round hole, from which base two opposing side parts (18, 118) ascend, each side part carrying a supporting portion (20, 120) facing outward, wherein the nut (14) has diametrically opposed projections which are shaped such that, in a determined rotational position, when the nut is arranged in the cage, the cage nut can be partially inserted axially into the square opening in a thin wall, if necessary after pressing together the side parts, whereupon the screw (30) can be screwed into the nut (14), wherein, before inserting and screwing in the screw (30), the cage with the nut is turned by an angle smaller than 90°, preferably 45°, within the square opening (26), wherein the cage with the nut is inserted in the diagonal direction of the rectangle, whereupon the cage with the nut can be inserted as far as the supporting portions (32) touch the thin wall, wherein the nut (14, 114) viewed from the top has a shape of a circle (34, 134) from which diametrical opposed projections protrude, ending in a right angle, wherein the dimensions are such that the circle (34, 134) fits into the square opening (26, 126) and the projections (22, 122) fit into two opposite corners of the square (26), **characterized in that** the supporting portions (20, 120) are formed by two strips (132, 133, 135) extending at an axial distance from one another and that one of the two strips (132) is arranged at a location corresponding to a missing portion of the other of the two strips (133, 135).

2. Cage nut (10) according to claim 1, **characterized in that** the sides of the supporting portions (20) have teeth (32) preventing the cage (12) from falling out after mounting.

3. Cage nut (10, 110) according to claim 1 or 2, **characterized in that** the cage (12, 112), in the area of the diametrically opposed projections (22, 122), has a shape suitable for sliding the cage through the rectangular, square opening.

4. Cage nut (10, 110) according to claim 3, **characterized in that** an axially extending edge (40, 140) with a contact surface is provided in the area, which contact surface engages with an edge (38, 138) formed by the nut at a transition from the circle to the projection (36, 136) when the screw (30, 130) is screwed into the nut (14, 114).

5. Cage nut (10) according to claim 3, **characterized in that** the projections of the nut form a grip-behind (50) which supports the inner rim of the square opening, if applicable after a rotation by 45°.

## Revendications

1. Écrou cage (10, 110) approprié pour une percée carrée dans une paroi mince, comprenant un écrou (14, 114) agencé dans une cage (12, 112),
- où la cage (12, 112) comprend un fond (16, 116) qui présente un trou rond, à partir duquel fond s'élèvent deux parties latérales (18, 118) opposées l'une à l'autre qui portent chacune une section d'appui (20, 120) respectivement dirigée vers l'extérieur,
- où la l'écrou (14) présente des épaulements (40, 140, 38, 41) diamétralement opposés l'un par rapport à l'autre qui sont formés de telle sorte que l'écrou placé dans la cage peut être partiellement inséré, dans une certaine position de rotation, dans la percée carrée dans une paroi mince, axialement, si nécessaire après la compression des parties latérales l'une contre l'autre, à la suite de quoi la vis (30) peut être vissée dans l'écrou (14),
- où avant l'introduction et le serrage de la vis (30), la cage avec l'écrou est soumise à une rotation suivant un angle inférieur à 90 degrés, de préférence 45 degrés, à l'intérieur de la percée carrée (26),
- la cage avec l'écrou étant insérée dans une direction diagonale du rectangle, à la suite de quoi la cage avec l'écrou peut être insérée au niveau de la paroi mince pour venir en butée des sections d'appui (32),
- l'écrou (14, 114) ayant, en une vue de dessus, la forme d'un cercle (34, 134), à partir duquel des épaulements, diamétralement opposés, font saillie en fuite avec un angle droit,
- les dimensions étant telles que le cercle (34, 134) passe dans l'ouverture (26, 126) carrée et les épaulements (22, 122) passent dans deux coins du carré (26) étant opposés,
**caractérisé en ce que** les sections d'appui (20, 120) sont formées par deux lattes (132, 133, 135) gisant à une distance axiale l'une de l'autre, et **en ce qu'**une latte (132) est agencée dans une section où l'autre latte (133, 135) est absente.

2. Écrou cage (10) selon la revendication 1, **caractérisé en ce que** les côtés des sections d'appui (20) portent une denture (32) qui empêche que la cage (12) ne ressorte après le montage.

3. Écrou cage (10, 110) selon la revendication 1 ou 2, **caractérisé en ce que** la cage (12, 112) a, dans la zone des épaulements (22, 122) diamétralement opposés, une forme pouvant être poussée et passer à travers la percée carrée, rectangulaire.

4. Écrou cage (10, 110) selon la revendication 3, **caractérisé en ce que**, dans la zone, une arête (40, 140) s'étendant axialement et ayant une surface d'appui est prévue, qui, lors du serrage de la vis (30, 130), vient en prise dans l'écrou (14, 114) avec une arête (38, 138) formée par l'écrou à la transition du cercle vers l'épaulement (36, 136).

5. Écrou cage (10, 110) selon la revendication 3, **caractérisé en ce que** les épaulements de l'écrou forment une retenue arrière (50) qui soutient le bord intérieur de la percée carrée, le cas échéant après une rotation de 45 degrés.
